(19) **Europäisches Patentamt / European Patent Office / Office européen des brevets**

(11) **EP 2 448 332 B1**

(12) **EUROPEAN PATENT SPECIFICATION**

(45) Date of publication and mention of the grant of the patent:
**07.08.2019 Bulletin 2019/32**

(21) Application number: **10791514.2**

(22) Date of filing: **21.06.2010**

(51) Int Cl.:
*G01S 5/02* (2010.01)   *H04W 72/12* (2009.01)

(86) International application number:
**PCT/CN2010/074172**

(87) International publication number:
**WO 2010/149008 (29.12.2010 Gazette 2010/52)**

(54) **METHOD FOR SENDING LOCATION INFORMATION AND DEVICE THEREOF**

VERFAHREN ZUM SENDEN VON STANDORTINFORMATIONEN UND VORRICHTUNG DAFÜR

PROCÉDÉ D'ÉMISSION D'INFORMATIONS DE LOCALISATION ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.06.2009  CN 200910150704**

(43) Date of publication of application:
**02.05.2012  Bulletin 2012/18**

(73) Proprietor: **Huawei Technologies Co., Ltd.
Longgang District
Shenzhen, Guangdong 518129 (CN)**

(72) Inventors:
• **CHEN, Shi
Shenzhen
Guangdong 518129 (CN)**
• **LI, Yuanjie
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
WO-A1-2009/076368   WO-A2-2010/080845
CN-A- 1 197 362   CN-A- 1 250 582
US-B1- 6 529 493

• LG ELECTRONICS: "Investigation on Positioning Support", 3GPP DRAFT; R1-092107_LG_POSITIONING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090502, 2 May 2009 (2009-05-02), XP050339552, [retrieved on 2009-05-02]
• ERICSSON ET AL: "WF on RAN1 concept for OTDOA", 3GPP DRAFT; R1-092213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20090504, 9 May 2009 (2009-05-09), XP050489123, [retrieved on 2009-05-09]

## Description

### FIELD OF THE INVENTION

The present invention relates to the field of communications technology, and in particular, to a method and a device for transmitting positioning information.

### BACKGROUND OF THE INVENTION

In a long term evolution (LTE) system, LTE Release 9 (R9) uses a positioning technology based on observed time difference of arrival (OTDOA) to determine the position of a user equipment (UE). The basic principle of the positioning technology is as follows: when three or more base stations exist in the system, the position of the UE may be determined according to a time difference of arrival of downlink transmission signals of different base stations; and the more base stations the system has, the more accurate the determined position of the UE is.

Therefore, in the LTE system, one of the main factors which affect positioning accuracy is the monitoring capability of the UE. The more cells the UE is capable of monitoring, the higher the positioning accuracy is. In order to improve the monitoring capability of the UE, a special positioning sub-frame is employed to measure a time difference of arrival of different base stations. Moreover, in order to improve the positioning accuracy, the positioning sub-frame may be accumulated continuously in time. For example, the number of continuously accumulated sub-frames may be 1, 2, 4, 6, or the like. The positioning sub-frame is a sub-frame which is adapted to transmit a positioning signal and enable a terminal to perform positioning according to the transmitted positioning signal, and is also called an enhanced-idle periodical downline (E-IPDL) sub-frame or a low interference sub-frame (LIS).

In the prior art, because the continuous accumulation of positioning sub-frames in time is supported in the LTE system, the positioning sub-frame may conflict with sub-frames for other uses, for example, a positioning sub-frame may conflict with a sub-frame including a synchronization channel (SCH) and/or a broadcast channel (BCH), which therefore affects system performance.

LG ELECTRONICS: "Investigation on Positioning Support", 3GPP DRAFT; R1-092107, 3RD GENERATION PARTNERSHIP PROJECT, MOBILE COMPETENCE CENTRE; 650, ROUTE DES LUCIOLES; F-06921 SOPHIA-ANTIPOLIS CEDEX; FRANCE, no. San Francisco, USA; 2 May 2009, describes a PRS pattern which is provided as follows:

Providing that the length of PRS sequence is $N$ and $N_p = N + 1$, the frequency position $k_l$ at OFDM symbol number $l$ within the slot is given by equation (1).

$$k_l = \left( a^{n_{ID}} \cdot \left( l + 1 \right) \right) \bmod N_p - 1 \qquad (1)$$

where $N_p$ is the smallest prime number larger than $N$ and $a^{n_{ID}}$ is the parameter related to cell ID $\left( N_{ID}^{cell} \right)$ and frequency reuse. For example, $a^{n_{ID}}$ could be $a^{n_{ID}} = \left( N_{ID}^{cell} \bmod 6 + 1 \right)$ in case that frequency reuse is 6. If $N_p \neq N + 1$, equation (1) can be written as $k_l = ((a^{n_{ID}} \cdot (l + 1)) \bmod N_p - 1) \bmod N$.

US 6529493 B1 describes a mobile station of a digital cellular communications system, the station being of the type comprising: means for transmitting and receiving telecommunications signals by radio, in time division multiple access mode; means for receiving positioning signals transmitted by a positioning system; and processor means for processing said telecommunications signals and said positioning signals. Said processor means are continuously connected to said means for transmitting and receiving telecommunications signals and to said means for receiving positioning signals, said processor means making use of received positioning signals during moments in which said telecommunications signals are not being transmitted and are not being received.

ERICSSON ET AL: "WF on RANI concept for OTDOA", 3GPP DRAFT; R1-092213, 3RD GENERATION PARTNERSHIP PROJECT, MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 9 May 2009, describes a PRS pattern. In particular, the PRS pattern defines as follows:

High frequency/time reuse, at least 6 is supported;
PRS transmitted from 1 antenna port;
At least one PRS RE per OFDM symbol that is not occupied by CRS in a PRB for normal subframes if only frequency reuse is supported;

MBSFN subframes have the same PRS pattern as normal subframes;
Same pattern used in all PRBs used for positioning in frequency dimension in one subframe;
Practical receiver dynamic range limitations should be considered; and
PRS pattern generated from a function based on PCI.

WO 2010/080845 A2 describes systems and methodologies that facilitate providing high reuse for transmitting reference signals, such as positioning reference signals (PRS) and cell-specific reference signals (CRS), to improve hearability thereof for applications such as trilateration and/or the like. In particular, PRSs can be transmitted in designated or selected positioning sub frames. Resource elements within the positioning sub frame can be selected for transmitting the PRSs and can avoid conflict with designated control regions, resource elements used for transmitting cell-specific reference signals, and/or the like. Resource elements for transmitting PRSs can be selected according to a planned or pseudo-random reuse scheme.

## SUMMARY OF THE INVENTION

The present invention is directed to a method and a device for transmitting positioning information. In the method, transmitting positioning reference information is transmitted according to a positioning sub-frame, so as to ensure that no conflict occurs between the positioning sub-frame and sub-frames for other uses, which therefore has no detrimental effect on the system performance.

An aspect of the present invention provides a method for transmitting positioning information, where the method includes: determining a positioning sub-frame for transmitting a positioning reference signal (PRS); and transmitting the PRS according to the positioning sub-frame.

When the positioning sub-frame is a normal sub-frame, and the positioning sub-frame is a sub-frame comprising a synchronization channel, SCH, and/or a broadcast channel, BCH, the step of transmitting the PRS according to the positioning sub-frame further includes: transmitting the PRS on an OFDM symbol that does not transmit the SCH and/or the BCH; or transmitting the PRS on a resource block that does not transmit the SCH and/or the BCH; or transmitting the PRS on a resource element that does not transmit the SCH and/or the BCH, and wherein the transmitting the PRS according to the positioning sub-frame further includes transmitting the PRS on an OFDM symbol that does not transmit a cell-specific reference signal, CRS, a physical control format indicator channel, PCFICH, a physical hybrid automatic repeat request, ARQ, indicator channel, PHICH, and a physical downlink control channel, PDCCH.

Another aspect of the present invention provides a device for transmitting positioning information, where the device includes: a determining unit, adapted to determine a positioning sub-frame for transmitting a PRS; and a transmitting unit, adapted to transmit the PRS according to the positioning sub-frame.

When the positioning sub-frame determined by the determining unit is a normal sub-frame, and the positioning sub-frame is a sub-frame comprising a synchronization channel, SCH, and/or a broadcast channel, BCH, the transmitting unit is further configured to transmit the PRS on an OFDM symbol that does not transmit the SCH and/or the BCH; or transmit the PRS on a resource block that does not transmit the SCH and/or the BCH; or transmit the PRS on a resource element that does not transmit the SCH and/or the BCH, and wherein the transmitting unit is further configured to transmit the PRS on an OFDM symbol that does not transmit a cell-specific reference signal, CRS, a physical control format indicator channel, PCFICH, a physical hybrid automatic repeat request, ARQ, indicator channel, PHICH, and a physical downlink control channel, PDCCH.

Through the method and the device of the present invention, the transmission of positioning reference information according to a positioning sub-frame ensures that no conflict occurs between the positioning sub-frame and sub-frames for other uses, which therefore has no effect on the system performance.

## DETAILED DESCRIPTION OF THE DRAWINGS

To illustrate the technical solution according to the embodiments of the present invention or in the prior art more clearly, the accompanying drawings for describing the embodiments are introduced briefly in the following. Apparently, the accompanying drawings in the following description are some embodiments of the present invention, and persons skilled in the art may derive other drawings from the accompanying drawings without creative efforts.

FIG. 1 is a flow chart of a method for transmitting positioning information according to Embodiment 1 of the present invention;
FIG. 2 is a first schematic diagram of transmitting a PRS according to Embodiment 2 of the present invention;
FIG. 3 is a second schematic diagram of transmitting a PRS according to Embodiment 2 of the present invention; and
FIG. 4 is a schematic constitutional diagram of a device for transmitting positioning information according to Example 6.

**DETAILED DESCRIPTION OF THE EMBODIMENTS**

The technical solution of the present invention is clearly and completely described in the following with reference to the accompanying drawings. It is obvious that the embodiments to be described are a part rather than all of the embodiments of the present invention. All other embodiments obtained by persons skilled in the art based on the embodiments of the present invention without creative efforts shall fall within the protection scope of the present invention as defined in the appended claims.

**Embodiment 1**

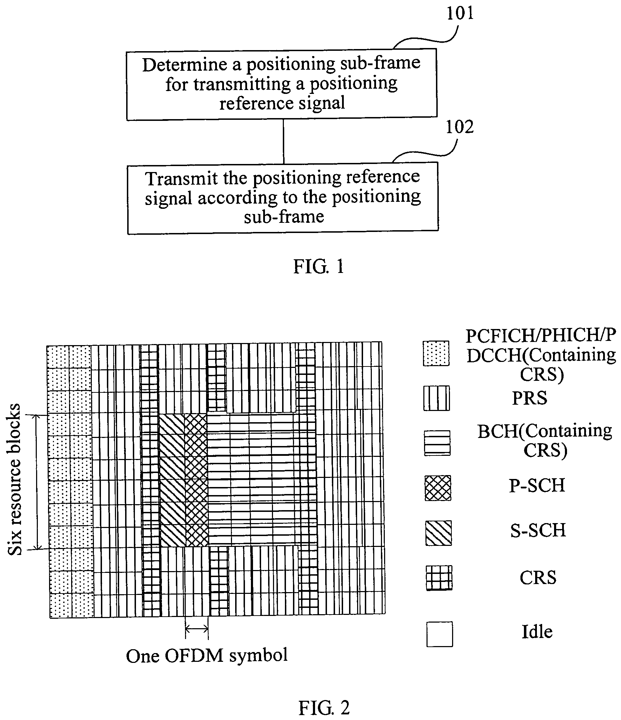

As shown in FIG. 1, this embodiment provides a method for transmitting positioning information, in which the method includes:

> Step 101: Determine a positioning sub-frame for transmitting a PRS; and
> Step 102: Transmit the PRS according to the positioning sub-frame.

In this embodiment, the positioning sub-frame may be a normal sub-frame, a multicast broadcast single frequency network (MBSFN) sub-frame, or a persistently scheduled physical downlink shared channel (PDSCH) sub-frame, but it is not limited to the above sub-frames and may be determined according to an actual situation. The normal sub-frame may be a common data transmission sub-frame.

In an LTE system, because the positioning sub-frame is accumulated continuously in time, for example, the number of continuously accumulated sub-frames may be 1, 2, 4, or 6, the transmission of a PRS may be decided according to the positioning sub-frame. In this way, it is ensured that no conflict occurs between the positioning sub-frame and sub-frames for other uses, which therefore has no effect on the system performance.

In other embodiments, when the positioning sub-frame is a normal sub-frame, and the positioning sub-frame is a sub-frame including an SCH and/or a BCH, the transmitting the PRS according to the positioning sub-frame may include: not transmitting the PRS on an orthogonal frequency division multiplexing (OFDM) symbol that transmits the SCH and/or the BCH; or not transmitting the PRS on a resource block that transmits the SCH and/or the BCH; or not transmitting the PRS on a resource element that transmits the SCH and/or the BCH.

In other embodiments, when the positioning sub-frame is a normal sub-frame, and the positioning sub-frame is a sub-frame including an SCH and/or a BCH, the transmitting the PRS according to the positioning sub-frame may include: transmitting the PRS on an OFDM symbol that does not transmit the SCH and/or the BCH, and on an OFDM symbol that does not transmit a cell-specific reference signal (CRS), a physical control format indicator channel (PCFICH), a physical hybrid automatic repeat request (ARQ) indicator channel (PHICH), and a physical downlink control channel (PDCCH).

In other embodiments, when the positioning sub-frame is a normal sub-frame, and the positioning sub-frame is a sub-frame including an SCH and/or a BCH, the transmitting the PRS according to the positioning sub-frame may include: transmitting the PRS on a resource element that does not transmit the SCH and/or the BCH, and on an OFDM symbol that does not transmit a CRS, a PCFICH, a PHICH, and a PDCCH.

In other embodiments, when the positioning sub-frame is a normal sub-frame, and the positioning sub-frame is a sub-frame including an SCH and/or a BCH, the transmitting the PRS according to the positioning sub-frame may include: transmitting the PRS on an OFDM symbol that does not transmit a CRS, a PCFICH, a PHICH, and a PDCCH, wherein the OFDM symbol is in other resource blocks than a resource block that transmits the SCH and/or the BCH.

**Embodiment 2**

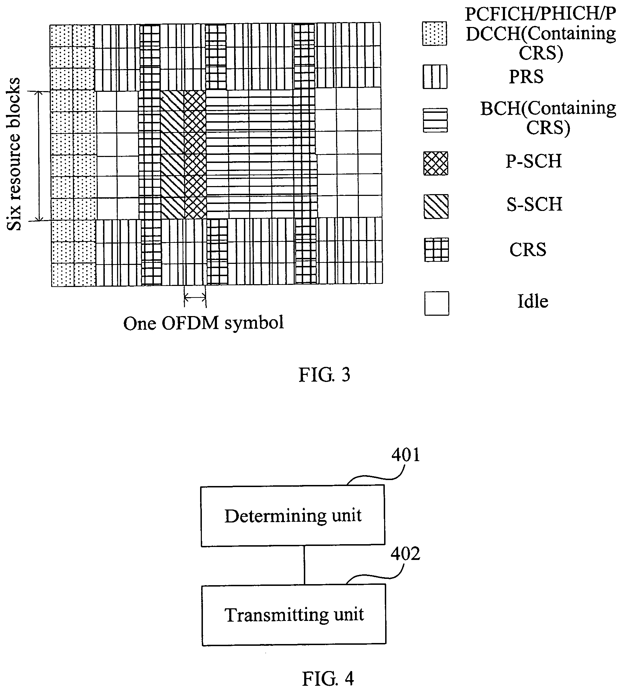

This embodiment provides a method for transmitting positioning information, in which the method is described in detail in the following with reference to FIG. 2 and FIG. 3 by taking a situation that the positioning sub-frame is a normal sub-frame as an example.

In this embodiment, when it is determined that the positioning sub-frame is a sub-frame including an SCH and/or a BCH, the following manner may be adopted: the PRS is not transmitted on the sub-frame including the SCH and/or the BCH. In this way, the operation is simple, and no effect is produced on detection performance of the SCH and/or the BCH.

In this embodiment, when the PRS is not transmitted on the sub-frame including the SCH and/or the BCH, the PRS may be transmitted by using a next non-conflict sub-frame (such as a sub-frame not including an SCH and/or a BCH). In this way, no PRS is lost, and no effect is produced on the positioning accuracy, which has more obvious advantages especially when system bandwidth is small. Because when the bandwidth is small, signals for positioning in each sub-frame are few, at this time, accumulation in time is necessary, and transmitting the positioning signal by using the next non-conflict sub-frame may ensure the accumulation of the positioning signal in time.

In this embodiment, when it is determined that the positioning sub-frame for transmitting the PRS is a sub-frame including an SCH and/or a BCH, the following manner may also be adopted: the PRS is not transmitted at a position where a conflict occurs. For example, the PRS is not transmitted on an OFDM symbol that transmits the SCH and/or the BCH, or on a resource block that transmits the SCH and/or the BCH, or on a resource element that transmits the SCH and/or the BCH.

FIG. 2 and FIG 3 show two solutions for transmitting a PRS provided in this embodiment. The SCH and the BCH locate in the middle six resource blocks. The positioning sub-frame not only transmits the PRS, but also transmits a CRS, a PCFICH, a PHICH, and a PDCCH. It may be understood by persons skilled in the art that the embodiment of the present invention is not limited to the solutions shown in FIG. 2 and FIG. 3, and other solutions may also be adopted. For example, in some situations, the positioning sub-frame may also contain other control channels, or may not contain one or more of the CRS, the PCFICH, the PHICH, and the PDCCH. The embodiment of the present invention is described in detail in the following with reference to FIG 2 and FIG. 3.

As shown in FIG. 2, a PRS may not be transmitted on a resource element that transmits the SCH and the BCH (that is, the PRS is not transmitted on a resource element including the SCH and the BCH in the middle six resource blocks), and the PRS may not be transmitted on an OFDM symbol including a CRS, a PCFICH, a PHICH, and a PDCCH. In this way, the PRS is transmitted on other resource elements than the resource element that transmits the SCH and the BCH in the middle six resource blocks, and on other OFDM symbols than the OFDM symbol that transmits the CRS, the PCFICH, the PHICH, and the PDCCH, which therefore reduces the number of lost PRSs due to a sub-frame conflict, and also reduces the effect on the positioning accuracy.

As shown in FIG. 3, a PRS may not be transmitted in a resource block that transmits the SCH and the BCH (that is, the PRS is not transmitted in the middle six resource blocks), and the PRS may not be transmitted on an OFDM symbol including a CRS, a PCFICH, a PHICH, and a PDCCH in other resource blocks. In this way, the PRS is transmitted on an OFDM symbol that does not transmit the CRS, the PCFICH, the PHICH, and the PDCCH, wherein the OFDM symbol is in other resource blocks than a resource block that transmits the SCH and/or the BCH.

In an LTE system, because transmit power of the PRS is high, when a user in an adjacent cell detects the SCH and/or the BCH of the cell, interference of the PRS from other cells easily occurs. Through a frame structure shown in FIG. 3 according to the embodiment of the present invention, because the PRS is not transmitted in the middle six resource blocks, the PRS has no effect on the detection performance of the SCH and/or the BCH. In addition, because the PRS is not transmitted in only the middle six resource blocks, when the system bandwidth is large, the effect of the sub-frame conflict on the positioning accuracy is limited.

In this embodiment, when the positioning sub-frame is a normal sub-frame, and when it is determined that the positioning sub-frame for transmitting the PRS is a sub-frame including the SCH and/or the BCH, if the PRS occupies a part of the bandwidth, the PRS may be transmitted, by scheduling manner, on resource block that does not transmit the SCH and/or the BCH. For example, the PRS may be transmitted on an OFDM symbol that does not transmit a CRS, a PCFICH, a PHICH, and a PDCCH in a resource block except the middle six resource blocks. When the solution is adopted, because the PRS occupies a part of the bandwidth, a base station may be required to inform an UE, by scheduling manner, of the resource block (or a band) that transmits the PRS. When the PRS occupies a part of the bandwidth, continuous PRSs may be transmitted by scheduling manner, which therefore ensures the positioning accuracy of the UE.

It may be known from the embodiment that, when the positioning sub-frame is a normal sub-frame, and the positioning sub-frame is a sub-frame including an SCH and/or a BCH, a PRS is transmitted on an OFDM symbol that does not transmit the SCH and/or the BCH, or the PRS is transmitted on a resource block that does not transmit the SCH and/or the BCH, or the PRS is transmitted on a resource element that does not transmit the SCH and/or the BCH, or the PRS is not transmitted on the sub-frame including the SCH and/or the BCH. Thereby, the conflict between the positioning sub-frame and the sub-frame including the SCH and /or the BCH may be prevented as much as possible, so that the effect of the conflict on the detection performance of the SCH and/or the BCH and the positioning accuracy and the limitation of the conflict on the base station scheduling are reduced.

## Example 3

This example provides a method for transmitting positioning information, in which the method is described in detail in the following by taking a situation that the positioning sub-frame is an MBSFN sub-frame as an example.

It may be known by persons skilled in the art that, in a frequency division duplex (FDD) mode, only a sub-frame 1, a sub-frame 2, a sub-frame 3, a sub-frame 6, a sub-frame 7, and a sub-frame 8 may be used as MBSFN sub-frames; and in a time division duplex (TDD) mode, only a sub-frame 3, a sub-frame 4, a sub-frame 7, a sub-frame 8, and a sub-frame 9 may be used as MBSFN sub-frames. Therefore, if the MBSFN sub-frame is selected as the positioning sub-frame, because the positioning sub-frame requires continuous accumulation in time, the positioning sub-frame may conflict with sub-frames for other uses (or called non-MBSFN sub-frames). For example, when the number of continuously accumulated positioning sub-frames is four, which is required in the FDD mode, because only three continuous MBSFN sub-frames are adopted to transmit a PRS, to meet the condition that the number of the continuously accumulated positioning sub-frames is four, a conflict occurs between the positioning sub-frame and the sub-frames for other uses.

Therefore, in this example, a PRS may be transmitted only on continuous MBSFN sub-frames even if the number of the continuous MBSFN sub-frames is smaller than the required number of the continuously accumulated positioning sub-frames. For example, if the required number of the continuously accumulated positioning sub-frames is four, a PRS may be transmitted on the sub-frame 1, the sub-frame 2, and the sub-frame 3 in the FDD mode. Although this solution may not be able to achieve the number of the continuously accumulated sub-frames, the operation is simple, and the conflict between the PRS and the sub-frames for other uses is avoided.

In this example, a PRS may also be transmitted on non-continuous MBSFN sub-frames whose number is equal to the number of the continuously accumulated positioning sub-frames. For example, if the required number of the continuously accumulated positioning sub-frames is four, the PRS may be transmitted on the sub-frame 1, the sub-frame 2, the sub-frame 3, and the sub-frame 6 in the FDD mode; and the PRS may be transmitted on the sub-frame 3, the sub-frame 4, the sub-frame 7, and the sub-frame 8 in the TDD mode. In this way, no PRS is lost due to the sub-frame conflict, which therefore has no effect on the positioning accuracy.

Of course, in this example, when the number of the continuous MBSFN sub-frames is smaller than the number of the continuously accumulated positioning sub-frames, a PRS may be transmitted by partially using the MBSFN sub-frames and partially using normal sub-frames. That is, the number of the continuous MBSFN sub-frames and the non-MBSFN sub-frames which transmit the PRS is equal to the number of the continuously accumulated positioning sub-frames.

### Example 4

This example provides a method for transmitting positioning information.

When a TDD mode is adopted, only a sub-frame 3, a sub-frame 4, a sub-frame 7, a sub-frame 8, and a sub-frame 9 may be used as positioning sub-frames. In addition, it should be noted that, as for the TDD, the proportion of special sub-frames and uplink sub-frames in some uplink/downlink distribution ratios is large, for example, an uplink/downlink distribution ratio is zero, as shown in Table 1:

**Table 1**

| Uplink/downlink distribution ratio | Sub-frame number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |

It may be known from Table 1 that, only the sub-frame 0 and the sub-frame 5 may be used as downlink sub-frames. Because the sub-frame 0 and the sub-frame 5 contain an SCH and/or a BCH, no sub-frame may be used as a positioning sub-frame in the case that the uplink/downlink distribution ratio is zero. In this way, when a conflict occurs between the positioning sub-frame and the sub-frames for other uses, it is preferred that the positioning sub-frame performs no transmission.

### Example 5

This example provides a method for transmitting positioning information.

In this example, when a positioning sub-frame is a sub-frame including a persistent scheduled PDSCH, the persistent scheduled PDSCH may be abandoned, and a PRS is transmitted.

Because the sub-frame of the persistent scheduled PDSCH is configured by high-layer signaling, and a positioning period is much longer than a persistent scheduling period, when the positioning sub-frame conflicts with the sub-frame of the persistent scheduled PDSCH, the effect of abandoning the persistent scheduled PDSCH is small. At the same time, because the persistent scheduling has a hybrid automatic retransmission request (HARQ) process, when initial transmission makes a mistake, retransmission may make up the performance of the persistent scheduled PDSCH.

It may be known from the example that, no detrimental effect is produced on the system performance while the positioning accuracy is ensured through the aforementioned method.

**Example 6**

This example provides a device for transmitting positioning information. As shown in FIG. 4, the device includes a determining unit 401 and a transmitting unit 402. The determining unit 401 is adapted to determine a positioning sub-frame for transmitting a PRS; and the transmitting unit 402 is connected to the determining unit 401, and is adapted to transmit the PRS according to the positioning sub-frame.

It may be known from the example that, the transmission of the PRS is decided according to the positioning sub-frame. In this way, it is ensured that no conflict occurs between the positioning sub-frame and the sub-frames for other uses, which therefore has no effect on the system performance.

**Embodiment 7**

This embodiment provides a device for transmitting positioning information.

In this embodiment, when the determining unit 401 determines that a positioning sub-frame is a normal sub-frame, and the positioning sub-frame is a sub-frame including an SCH and/or a BCH, the transmitting unit 402 does not transmit a PRS on the sub-frame including the SCH and/or the BCH. In this way, the operation is simple, and no effect is produced on the detection performance of the SCH and/or the BCH.

In this embodiment, when the determining unit 401 determines that the positioning sub-frame is a normal sub-frame, and the transmitting unit 402 does not transmit a PRS on the sub-frame including the SCH and/or the BCH, the transmitting unit 402 may also use a next non-conflict sub-frame (for example, a sub-frame not including an SCH and/or a BCH) to transmit the PRS. In this way, no PRS is lost, and no effect is produced on the positioning accuracy, which has more obvious advantages especially when the system bandwidth is small.

In this embodiment, when the determining unit 401 determines that the positioning sub-frame is a normal sub-frame, and the positioning sub-frame is a sub-frame including an SCH and/or a BCH, the transmitting unit 402 does not transmit a PRS at a position where a conflict occurs. For example, the PRS is not transmitted on an OFDM symbol that transmit the SCH and/or the BCH, or on a resource block that transmit the SCH and/or the BCH, or on a resource element that transmit the SCH and/or the BCH, which is as described in Embodiment 2 and is not described herein again.

In this embodiment, when the determining unit 401 determines that the positioning sub-frame is a normal sub-frame, the positioning sub-frame is a sub-frame including an SCH and/or a BCH, and the PRS occupies a part of the bandwidth, the transmitting unit 402 may transmit the PRS on a resource block not including the SCH and/or the BCH by scheduling manner. The specific transmission manner is as described in Embodiment 2, and is not described herein again. When the solution is adopted, because the PRS occupies only a part of the bandwidth, a base station may be required to inform an UE, by scheduling manner, of the resource block (or the band) transmitting the PRS. When the PRS occupies a part of the bandwidth, continuous PRSs may be transmitted by scheduling manner, which may ensure the positioning accuracy of the UE.

In this embodiment, when the determining unit 401 determines that the positioning sub-frame is an MBSFN sub-frame, and the number of continuous MBSFN sub-frames is smaller than the number of continuously accumulated positioning sub-frames, the transmitting unit 402 transmits the PRS only on the continuous MBSFN sub-frames. The transmission manner is as described in Embodiment 3, and is not described herein again.

In this embodiment, when the determining unit determines that the positioning sub-frame is an MBSFN sub-frame, and the number of continuous MBSFN sub-frames is smaller than the number of continuously accumulated positioning sub-frames, the transmitting unit 402 may also transmit the PRS on non-continuous MBSFN sub-frames whose number is equal to the number of the continuously accumulated positioning sub-frames.

In this embodiment, when the determining unit 401 determines that the positioning sub-frame is an MBSFN sub-frame, and the number of continuous MBSFN sub-frames is smaller than the number of continuously accumulated positioning sub-frames, the transmitting unit 402 may also transmit the PRS by partially using the MBSFN sub-frames and partially using normal sub-frames. That is, the number of the continuous MBSFN sub-frames and the non-MBSFN sub-frames which transmit the PRS is equal to the number of the continuously accumulated positioning sub-frames.

In this embodiment, when a TDD mode is adopted, and the determining unit 401 determines that the positioning sub-frame conflicts with sub-frames for other uses, the transmitting unit 402 does not transmit the PRS, which is as described in Embodiment 4, and is not described herein again.

In this embodiment, when the determining unit 401 determines that the positioning sub-frame is a sub-frame including a persistent scheduled PDSCH, the transmitting unit 402 may abandon the persistent scheduled PDSCH and transmit the PRS. In this way, because the sub-frame of the persistent scheduled PDSCH is configured by high-layer signaling, and a positioning period is much longer than a persistent scheduling period, when the positioning sub-frame conflicts with the persistent scheduled PDSCH, the effect of abandoning the persistent scheduled PDSCH is small. At the same time, because the persistent scheduling has an HARQ process, when the initial transmission makes a mistake, retransmission may make up the performance of the persistent scheduled PDSCH.

It may be known from the embodiment that, no detrimental effect is produced on the system performance while the positioning accuracy is ensured through the above device.

It may be further known by persons skilled in the art that, the units and the algorithm steps of each example that are described with reference to the embodiments disclosed herein may be implemented by electronic hardware, computer software, or a combination of electronic hardware and computer software. In order to clearly describe the interchangeability of the hardware and the software, the constitution and the steps of each example have been generally described according to the functions in the foregoing description. The situation that these functions are performed by hardware or software depends on specific application and a design constraint of the technical solutions. Persons skilled in the art may implement the described functions by using different methods for each specific application, and such implementation should not be regarded as going beyond the scope of the present invention.

The steps of the methods or algorithms described with reference to the embodiments disclosed herein may be implemented by hardware, a software module executed by a processor, or a combination of hardware and a software module executed by a processor. The software module may be disposed in a Random Access Memory (RAM), a memory, a Read-Only Memory (ROM), an electrically programmable ROM, an electrically erasable and programmable ROM, a register, a hard disk, a removable magnetic disk, a Compact Disk Read-Only Memory (CD-ROM), or any other storage medium well known in the art.

**Claims**

1. A method for transmitting positioning information, comprising:

   determining (101) a positioning sub-frame for transmitting a positioning reference signal, PRS; and
   transmitting (102) the PRS according to the positioning sub-frame; wherein
   when the positioning sub-frame is a normal sub-frame, and the positioning sub-frame is a sub-frame comprising a synchronization channel, SCH, and/or a broadcast channel, BCH, the step of transmitting the PRS according to the positioning sub-frame comprises:

   transmitting the PRS on an orthogonal frequency division multiplex, OFDM, symbol that does not transmit the SCH and/or the BCH; or
   transmitting the PRS on a resource block that does not transmit the SCH and/or the BCH; or transmitting the PRS on a resource element that does not transmit the SCH and/or the BCH;
   wherein the transmitting the PRS according to the positioning sub-frame further comprises:
   transmitting the PRS on an OFDM symbol that does not transmit a cell-specific reference signal, CRS, a physical control format indicator channel, PCFICH, a physical hybrid automatic repeat request, ARQ, indicator channel, PHICH, and a physical downlink control channel, PDCCH.

2. A device for transmitting positioning information, comprising:

   a determining unit (401), configured to determine a positioning sub-frame for transmitting a positioning reference signal, PRS; and
   a transmitting unit (402), configured to transmit the PRS according to the positioning sub-frame; wherein
   when the positioning sub-frame determined by the determining unit is a normal sub-frame, and the positioning sub-frame is a sub-frame comprising a synchronization channel, SCH, and/or a broadcast channel, BCH,
   the transmitting unit is further configured to transmit the PRS on an orthogonal frequency division multiplex, OFDM, symbol that does not transmit the SCH and/or the BCH; or transmit the PRS on a resource block that does not transmit the SCH and/or the BCH; or transmit the PRS on a resource element that does not transmit the SCH and/or the BCH;
   wherein the transmitting unit is further configured to transmit the PRS on an OFDM symbol that does not transmit a cell-specific reference signal, CRS, a physical control format indicator channel, PCFICH, a physical hybrid automatic repeat request, ARQ, indicator channel, PHICH, and a physical downlink control channel, PDCCH.

3. A storage medium, comprising: a software module, which, when executed by a processor, will cause a computer unit to perform a method according to claim 1.

**Patentansprüche**

1. Verfahren zum Senden von Positionierungsinformationen, aufweisend:

Ermitteln (101) eines Positionierungs-Teilframes zum Senden eines Positionierungsreferenzsignals, PRS; und Senden (102) des PRS gemäß dem Positionierungs-Teilframe; wobei wenn der Positionierungs-Teilframe ein normales Teilframe ist und das Positionierungs-Teilframe ein Teilframe ist, das einen Synchronisationskanal, SCH, und/oder einen Rundfunkkanal, BCH, aufweist, der Schritt vom Senden des PRS gemäß des Positionierungs-Teilframes aufweist:

Senden des PRS auf einem orthogonalen Frequenzmultiplexverfahren-, OFDM, Symbol, das den SCH und/oder den BCH nicht sendet; oder
Senden des PRS auf einem Ressourcenblock, der den SCH und/oder den BCH nicht sendet; oder
Senden des PRS auf einem Ressourcenelement, das den SCH und/oder den BCH nicht sendet;
wobei das Senden des PRS gemäß dem Positionierungs-Teilframe ferner aufweist:
Senden des PRS auf einem OFDM-Symbol, das ein zellspezifisches Referenzsignal, CRS, einen physischen Steuerformatindikatorkanal, PCFICH, einen physischen, hybriden automatische-Wiederholungsanfrage-, ARQ, Indikatorkanal, PHICH, und einen physischen Downlink-Steuerkanal, PDCCH, nicht sendet.

2. Vorrichtung zum Senden von Positionierungsinformationen, aufweisend:

eine Ermittlungseinheit (401), die konfiguriert ist, ein Positionierungs-Teilframe zum Senden eines Positionierungsreferenzsignals, PRS, zu ermitteln; und
eine Sendeeinheit (402), die konfiguriert ist, das PRS gemäß dem Positionierungs-Teilframe zu senden; wobei wenn das Positionierungs-Teilframe, das durch die Ermittlungseinheit ermittelt wird, ein normales Teilframe ist, und das Positionierungs-Teilframe ein Teilframe ist, das einen Synchronisationskanal, SCH, und/oder einen Rundfunkkanal, BCH, aufweist, die Sendeeinheit ferner konfiguriert ist, das PRS auf einem orthogonalen Frequenzmultiplexverfahrens-, OFDM, Symbol zu senden, das den SCH und/oder den BCH nicht sendet; oder das PRS auf einem Ressourcenblock zu senden, der den SCH und/oder den BCH nicht sendet; oder das PRS auf einem Ressourcenelement zu senden, das den SCH und/oder den BCH nicht sendet;
wobei die Sendeeinheit ferner konfiguriert ist, das PRS auf einem OFDM-Symbol zu senden, das ein zellspezifisches Referenzsignal, CRS, einen physischen Steuerformatindikatorkanal, PCFICH, einen physischen, hybriden automatische-Wiederholungsanfrage-, ARQ, Indikatorkanal, PHICH, und einen physischen Downlink-Steuerkanal, PDCCH, nicht sendet.

3. Datenspeichermedium, aufweisend: ein Softwaremodul, das, wenn von einem Prozessor durchgeführt, eine Computereinheit veranlasst wird, ein Verfahren nach Anspruch 1 auszuführen.

**Revendications**

1. Procédé de transmission d'informations de positionnement, comprenant de :

déterminer (101) une sous-trame de positionnement pour transmettre un signal de référence de positionnement, PRS ; et
transmettre (102) le PRS en fonction de la sous-trame de positionnement ; dans lequel lorsque la sous-trame de positionnement est une sous-trame normale, et que la sous-trame de positionnement est une sous-trame comprenant un canal de synchronisation, SCH, et/ou un canal de diffusion, BCH, l'étape de transmission du PRS en fonction de la sous-trame de positionnement comprend de :

transmettre le signal PRS sur un symbole de multiplexage par répartition orthogonale de la fréquence, OFDM, qui ne transmet pas le SCH et/ou le BCH ; ou transmettre le PRS sur un bloc de ressources qui ne transmet pas le SCH et/ou le BCH ; ou transmettre le PRS sur un élément de ressource qui ne transmet pas le SCH et/ou le BCH;
dans lequel la transmission du PRS en fonction de la sous-trame de positionnement comprend en outre de :
transmettre le PRS sur un symbole OFDM qui ne transmet pas un signal de référence spécifique à une cellule, CRS, un canal indicateur de format de commande physique, PCFICH, un canal indicateur de demande de répétition automatique, ARQ, hybride physique, PHICH, et un canal de commande physique de liaison descendante, PDCCH.

**2.** Dispositif de transmission d'informations de positionnement, comprenant :

une unité de détermination (401), configurée pour déterminer une sous-trame de positionnement pour transmettre un signal de référence de positionnement, PRS ; et

une unité de transmission (402), configurée pour transmettre le PRS en fonction de la sous-trame de positionnement ; dans lequel

lorsque la sous-trame de positionnement déterminée par l'unité de détermination est une sous-trame normale, et que la sous-trame de positionnement est une sous-trame comprenant un canal de synchronisation, SCH, et/ou un canal de diffusion, BCH,

l'unité de transmission est en outre configurée pour transmettre le PRS sur un symbole de multiplexage par répartition orthogonale de la fréquence, OFDM, qui ne transmet pas le SCH et/ou le BCH ; ou transmettre le PRS sur un bloc de ressources qui ne transmet pas le SCH et/ou le BCH ; ou transmettre le PRS sur un élément de ressource qui ne transmet pas le SCH et/ou le BCH ;

dans lequel l'unité de transmission est en outre configurée pour transmettre le PRS sur un symbole OFDM qui ne transmet pas un signal de référence spécifique à une cellule, CRS, un canal indicateur de format de commande physique, PCFICH, un canal indicateur de demande de répétition automatique, ARQ, hybride physique, PHICH, et un canal de commande physique de liaison descendante, PDCCH.

**3.** Support de stockage, comprenant : un module logiciel qui, lorsqu'il est exécuté par un processeur, amène une unité d'ordinateur à exécuter un procédé selon la revendication 1.

Determine a positioning sub-frame
for transmitting a positioning
reference signal

101

Transmit the positioning reference
signal according to the positioning
sub-frame

102

FIG. 1

Six resource blocks

One OFDM symbol

PCFICH/PHICH/P
DCCH(Containing
CRS)

PRS

BCH(Containing
CRS)

P-SCH

S-SCH

CRS

Idle

FIG. 2

PCFICH/PHICH/P
DCCH(Containing
CRS)

PRS

BCH(Containing
CRS)

P-SCH

S-SCH

CRS

Idle

One OFDM symbol

FIG. 3

Determining unit   401

Transmitting unit   402

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6529493 B1

- WO 2010080845 A2

### Non-patent literature cited in the description

- Investigation on Positioning Support. **LG ELECTRONICS.** 3GPP DRAFT; R1-092107, 3RD GENERATION PARTNERSHIP PROJECT. MOBILE COMPETENCE CENTRE, 02 May 2009

- WF on RANI concept for OTDOA. **ERICSSON et al.** 3GPP DRAFT; R1-092213, 3RD GENERATION PARTNERSHIP PROJECT. MOBILE COMPETENCE CENTRE, 09 May 2009